(19) Europäisches Patentamt
European Patent Office
Office européen des brevets

(11) **EP 3 605 996 B1**

(12) **EUROPEAN PATENT SPECIFICATION**

(45) Date of publication and mention
of the grant of the patent:
**13.07.2022 Bulletin 2022/28**

(21) Application number: **18856434.8**

(22) Date of filing: **10.09.2018**

(51) International Patent Classification (IPC):
*H04L 9/40* (2022.01)     *G06F 21/31* (2013.01)
*G06F 3/01* (2006.01)     *G06F 3/0346* (2013.01)
*H04L 67/131* (2022.01)

(52) Cooperative Patent Classification (CPC):
**G06F 3/011; G06F 3/012; G06F 3/0346;
G06F 21/31; G06Q 20/401; H04L 63/083;
H04L 67/131;** H04L 2463/102

(86) International application number:
**PCT/CN2018/104774**

(87) International publication number:
**WO 2019/052414 (21.03.2019 Gazette 2019/12)**

(54) **AUTHENTICATION METHOD, DEVICE, VR TERMINAL AND VR SERVER BASED ON VR SCENE**

AUTHENTIFIZIERUNGSVERFAHREN, VORRICHTUNG, VR-ENDGERÄT UND VR-SERVER BASIEREND AUF EINER VR-SZENE

PROCÉDÉ D'AUTHENTIFICATION, DISPOSITIF, TERMINAL VR, ET SERVEUR VR, BASÉS SUR UNE SCÈNE VR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2017 CN 201710826063**

(43) Date of publication of application:
**05.02.2020 Bulletin 2020/06**

(73) Proprietor: **Advanced New Technologies Co., Ltd.
George Town, Grand Cayman KY1-9008 (KY)**

(72) Inventor: **ZHAO, Hao
Zhejiang 311121 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 106 797 564**     **CN-A- 107 122 041**
**CN-A- 107 122 041**     **CN-A- 107 508 826**
**US-A1- 2013 347 087**     **US-B2- 8 424 065**

• **LIN C-L ET AL: "A password authentication
scheme with secure password updating",
COMPUTERS & SECURITY, ELSEVIER SCIENCE
PUBLISHERS. AMSTERDAM, NL, vol. 22, no. 1, 1
January 2003 (2003-01-01), pages 68-72,
XP004410384, ISSN: 0167-4048, DOI:
10.1016/S0167-4048(03)00114-7**

## Description

### TECHNICAL FIELD

The present specification relates to the field of computer applications, and in particular, to a virtual reality scenario-based authentication method and apparatus, a VR (virtual reality) terminal device, and a VR server device.

### BACKGROUND

In the virtual reality (VR) technology, a computer graphics system and various control interfaces are comprehensively used to generate a three-dimensional interactive environment on a computer, and provide an immersion feeling for users. VR interaction is characterized by being able to take over a full field of view of a user and provide "immersion experience" for the user. Therefore, currently, the VR technology is a user-machine interaction method that draws much attention, and many Internet enterprises are actively expanding their own related VR service scenarios, such as VR shopping, VR payment, and VR entertainment.

CN 107122041 A discloses a password input method and equipment, client equipment and virtual reality equipment. The method comprises the steps of displaying a plurality of first characters and a plurality of second characters in a mutual correspondence manner, wherein the first characters represent real password characters and at least one second character in the plurality of second characters is different from the first character corresponding to the second character; and receiving speech input, related to the second characters, from a user to serve as speech password input which is used for password judgement. According to one embodiment of the disclosure, the users can input passwords in the virtual reality equipment through speeches in a relatively safe manner

Lin Chun-Li et al.: "A password authentication scheme with secure password updating", Computers & Security, 22(1), Elsevier Science Publishers, 2003, refers to an improvement on the Peyravian-Zunic password scheme, which improves the password change protocol in the with regard to denial of service attacks, and which provides the forward secrecy property in session key distribution.

### SUMMARY

The invention is defined by a method, a virtual reality server device, and a computer-readable storage according to the independent claims. Preferred embodiments are defined in the dependent claims.

The present specification provides a virtual reality scenario-based authentication method, applied to a virtual reality terminal, where the method includes: calculating interactive environment authentication information based on random information delivered by a virtual reality server, obtaining password information entered by a user in a virtual reality scenario, and sending the password information and the interactive environment authentication information to the virtual reality server, so that the virtual reality server obtains random information through reverse calculation based on the interactive environment authentication information after the password information is verified, and matches the random information obtained through reverse calculation against the random information delivered to the virtual reality client, to perform security authentication on an interactive environment of the virtual reality scenario.

The present specification further provides a virtual reality scenario-based authentication method, applied to a virtual reality server, where the method includes: obtaining interactive environment authentication information and password information entered by a user in a virtual reality scenario that are sent by a virtual reality terminal, where the interactive environment authentication information is generated through calculation based on random information delivered to the virtual reality terminal, verifying the password information, and if the password information is verified, obtaining random information through reverse calculation based on the interactive environment authentication information, and verifying whether the random information obtained through reverse calculation matches the random information delivered by the virtual reality server, and determining that security authentication on an interactive environment of the virtual reality scenario succeeds if the random information obtained through reverse calculation matches the random information delivered to the virtual reality terminal.

The present specification further provides a virtual reality scenario-based authentication apparatus, applied to a virtual reality terminal, where the apparatus includes: a calculation module, configured to calculate interactive environment authentication information based on random information delivered by a virtual reality server, a first acquisition module, configured to obtain password information entered by a user in a virtual reality scenario, and a sending module, configured to send the password information and the interactive environment authentication information to the virtual reality server, so that the virtual reality server obtains random information through reverse calculation based on the interactive environment authentication information after the password information is verified, and matches the random information obtained through reverse calculation against the random information delivered to the virtual reality client, to perform security authentication on an interactive environment of the virtual reality scenario.

The present specification further provides a virtual reality scenario-based authentication apparatus, applied to a virtual reality server, where the apparatus includes: a second acquisition module, configured to obtain interactive environment authentication information and password information entered by a user in a virtual reality scenario that are sent by a virtual reality terminal, where the interactive environment authentication information is generated through calculation based on random information delivered to the virtual reality terminal, a verification module, configured to verify the password information, and if the password information is verified, obtain random information through reverse calculation based on the interactive environment authentication information, and verify whether the random information obtained through reverse calculation matches the random information delivered by the virtual reality server, and a determining module, configured to determine that security authentication on an interactive environment of the virtual reality scenario succeeds if the random information obtained through reverse calculation matches the random information delivered to the virtual reality terminal.

The present specification further provides a virtual reality terminal device, including: a processor, and a storage, configured to store a machine-executable instruction, where a machine-executable instruction that is stored in the storage and that corresponds to control logic of virtual reality scenario-based authentication is read and executed, to prompt the processor to: calculate interactive environment authentication information based on random information delivered by a virtual reality server, obtain password information entered by a user in a virtual reality scenario, and send the password information and the interactive environment authentication information to the virtual reality server, so that the virtual reality server obtains random information through reverse calculation based on the interactive environment authentication information after the password information is verified, and matches the random information obtained through reverse calculation against the random information delivered to a virtual reality client, to perform security authentication on an interactive environment of the virtual reality scenario.

The present specification further provides a virtual reality server device, including: a processor, and a storage, configured to store a machine-executable instruction, where a machine-executable instruction that is stored in the storage and that corresponds to control logic of virtual reality scenario-based authentication is read and executed, to prompt the processor to: obtain interactive environment authentication information and password information entered by a user in a virtual reality scenario that are sent by a virtual reality terminal, where the interactive environment authentication information is generated through calculation based on random information delivered to the virtual reality terminal, verify the password information, and if the password information is verified, obtain random information through reverse calculation based on the interactive environment authentication information, and verify whether the random information obtained through reverse calculation matches the random information delivered by the virtual reality server, and determine that security authentication on an interactive environment of the virtual reality scenario succeeds if the random information obtained through reverse calculation matches the random information delivered to the virtual reality terminal.

In the present specification, the virtual reality server not only completes user identity authentication based on the password information entered by the user, the virtual reality server can also further perform security authentication on the interactive environment of the virtual reality scenario based on the interactive environment authentication information that is sent in synchronization with the password information, to determine whether the current interactive environment is a legal interactive environment, thereby alleviating a security risk that the user faces when performing service interaction in an illegal VR interactive environment.

## BRIEF DESCRIPTION OF DRAWINGS

FIG. 1 is a flowchart illustrating a VR scenario-based authentication method, according to an implementation of the present specification;

FIG. 2 is a schematic diagram illustrating offsetting an operation focus by a user after the user enters a password character, according to an implementation of the present specification;

FIG. 3 is a schematic interaction diagram illustrating completing fast payment by a user in a VR scenario, according to an implementation of the present specification;

FIG. 4 is a schematic diagram illustrating completing security authentication on a VR payment environment through interaction between a VR server and a VR terminal, according to an implementation of the present specification;

FIG. 5 is a structural hardware diagram illustrating a VR terminal that a VR scenario-based authentication apparatus is mounted on, according to an implementation of the present specification;

FIG. 6 is a logical block diagram illustrating a VR scenario-based authentication apparatus, according to an implementation of the present specification;

FIG. 7 is a structural hardware diagram illustrating a VR server that another VR scenario-based authentication apparatus is mounted on, according to an implementation of the present specification; and

FIG. 8 is a logical block diagram illustrating another VR scenario-based authentication apparatus, according to an implementation of the present specification.

## DESCRIPTION OF IMPLEMENTATIONS

In practice, although the VR technology can provide a lifelike immersion feeling for a user, it is usually difficult for the user to complete information input in a VR scenario when the user wears a VR terminal for immersion experience. Therefore, more VR terminal devices start to provide some more humanized information input methods for users.

For example, for a head-mounted VR terminal device, when a user needs to enter password information in a VR scenario, the head-mounted VR terminal device usually can output an input interface that includes input characters in the VR scenario, and the user can interact with the VR scenario by using a head movement, to control a visual focus (name, an operation focus) in the VR scenario, and trigger to select a related input character in the input interface by using the visual focus, and then complete an input operation of the input character. For example, in an implementation, the user can select the input character by keeping the visual focus at the related input character in the input interface for specific duration (or the user can select the input character by using another interaction method, where a selection method is not limited in the present specification), and then trigger to complete the input operation of the input character.

With constant popularization of the VR technology, when the VR technology provides "immersion experience" for a user, because the VR technology is characterized by taking over a full field of view of the user, once a user field of view of a VR terminal (namely, a visual 3D interface output to the user when the user wears the VR terminal) is hijacked by a malicious program, privacy information, such as password information, entered by the user in a VR scenario may be leaked. In addition, because the user field of view in the VR scenario is different from a screen interaction interface of a conventional APP, if the user field of view is hijacked, the user cannot perceive the hijacking in the VR scenario at all. Therefore, it is of great significance to accurately identify whether a VR interactive environment of a VR scenario is legal to ensure security of information (in particular, some privacy information such as a payment password) entered by a user in the VR scenario.

In view of this, the present specification provides a technical solution for further performing security authentication on an interactive environment of a current VR scenario of a user based on password information entered by the user in the VR scenario.

According to the present invention, during implementation, a VR terminal calculates interactive environment authentication information based on random information delivered by a VR server, and obtains password information entered by a user in a virtual reality scenario, and then sends the password information together with the interactive environment authentication information to the VR server.

After receiving the password information and the interactive environment authentication information that are sent by the VR terminal, the VR server first verifies the password information, and obtains random information through reverse calculation based on the interactive environment authentication information after the password information is verified, and then matches the random information obtained through reverse calculation against the random information delivered to the virtual reality client, to perform security authentication on an interactive environment of the virtual reality scenario. If the random information obtained through reverse calculation matches the random information delivered to the virtual reality client, it indicates that the interactive environment of the current VR scenario is a legal interactive environment, and there is no security risk for a service operation of the user in the current VR scenario. On the contrary, if the random information obtained through reverse calculation does not match the random information delivered to the virtual reality client, it indicates that the interactive environment of the current VR scenario is an illegal interactive environment, and there is a security risk for a service operation of the user in the current VR scenario.

In this method, on a basis that the virtual reality server completes user identity authentication based on the password information entered by the user, the virtual reality server can further perform, based on the interactive environment authentication information that is sent in synchronization with the password information, security authentication on the interactive environment of the virtual reality scenario in which the user enters the password information, to determine whether the current interactive environment is a legal interactive environment, thereby alleviating a security risk that the user faces when performing service interaction in an illegal VR interactive environment.

For example, for a fast payment service in a VR scenario, when a user completes a fast payment transaction in the VR scenario by entering a payment password, if a VR terminal worn by the user is hijacked by a malicious program (for example, VR scenario-based attack behavior such as phishing, fraud, or page hijacking), the payment transaction initiated by the user in the VR scenario may be at a security risk. For example, the payment password entered by the user may be leaked, or a transaction fund may be transferred to an illegal account, resulting in a financial loss. In this case, if the VR server can accurately identify, in the background based on the interactive environment authentication information sent by the VR terminal, whether the interactive environment of the current VR scenario is legal, the payment transaction initiated by the user in the VR scenario can be terminated in time, thereby alleviating a security risk of the payment transaction initiated by the user in the VR scenario.

The following describes the present specification by using specific implementations with reference to specific application scenarios.

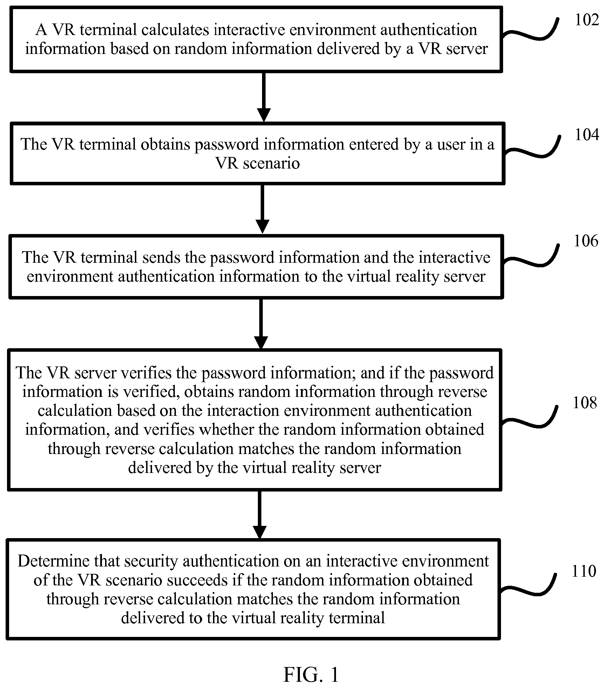

FIG. 1 illustrates a virtual reality scenario-based authentication method, according to an implementation of the present specification. The following steps are performed.

Step 102: A VR terminal calculates interactive environment authentication information based on random information delivered by a VR server.

Step 104: The VR terminal obtains password information entered by a user in a VR scenario.

It is worthwhile to note that an execution sequence of step 102 and an execution sequence of step 104 may be interchanged.

The VR terminal includes any form of terminal device that can provide three-dimensional VR immersion experience for a user, such as a head-mounted VR terminal device.

Client software (such as an APP) or an operating system developed based on the VR technology can be installed on the VR terminal, and the VR terminal can output a VR scenario model developed by a developer to the user by using the installed client software or operating system, so that the user wearing the VR terminal can obtain three-dimensional immersion experience in the VR scenario.

In addition, related sensors can be further mounted on the VR terminal, and the VR terminal can detect, by using the mounted sensors, an interaction operation performed by the user in the VR scenario, and then can understand an intention of the user based on the sensed interaction operation, thereby implementing interaction between the user and the VR scenario.

For example, in practice, a gravity sensor and an acceleration sensor can be built in the VR terminal, and the VR terminal can track and identify a head movement of the user by using the built-in gravity sensor and acceleration sensor, and then can understand an intention of the user and interact with the user. For the user, in a process of wearing the VR terminal, the user can control movement of an operation focus (namely, a visual focus) in the VR scenario by using a head action, and trigger a corresponding action in the VR scenario to interact with the VR scenario. For example, the user can control movement of a visual focus by using a head action, and keep, for specific duration, the visual focus on a virtual element (for example, a virtual button) provided in the VR scenario, to select the virtual element and trigger an execution action corresponding to the virtual element.

In the present specification, in a process of performing immersion experience in the VR scenario, the user can perform a specific interaction operation in the VR scenario, to interact with the VR scenario and trigger a target service. The target service can specifically include a service that needs user identity authentication. For example, the target service can include any form of security service that requires the user to enter the password information to authenticate an identity of the user.

The VR terminal can pre-define several predetermined interaction operations used to trigger the target service in the VR scenario. When the user interacts with the VR scenario, the VR terminal can detect, by using a mounted sensor, an interaction operation performed by the user, and determine whether the detected interaction operation matches a predetermined interaction operation. If the detected interaction operation matches the predetermined interaction operation, the target service can be immediately triggered in the VR scenario.

It is worthwhile to note that the previously described predetermined interaction operations used to trigger the target service in the VR scenario can be included in any type of interaction method in the VR field, and are not particularly limited in the present specification.

For example, in an implementation, the target service can be specifically a VR scenario-based fast payment service. In this case, a "payment" button for initiating payment can be provided in the VR scenario, and the predetermined interaction operation can be an operation of selecting the "payment" button by the user by controlling movement of the operation focus. For example, in a common interaction method, the user can control movement of the visual focus by using a head action, and keep the visual focus at the "payment" button for specific duration, to select the "payment" button and then trigger the fast payment service in the VR scenario.

In the present specification, when detecting that the user triggers the target service in the virtual reality scenario, the VR terminal can send a service request to the VR server. A random algorithm for generating random information can be preloaded on the VR server. After receiving a service request sent by the VR terminal, the VR server can generate random information based on the random algorithm, and then encrypt the random information and deliver encrypted random information to the VR client.

After receiving the encrypted random information delivered by the VR server: the VR client can decrypt the encrypted random information and store the random information, and then use the random information as a calculation parameter to calculate the interactive environment authentication information; and the VR client can output a password input interface in the VR scenario, so that the user can interact with the VR scenario to control displacement of the operation focus (for example, the user can interact with the VR scenario by using a head action, to control displacement of the operation focus), to trigger to select an input character in the password input interface, and then complete an input operation of the input character.

To ensure password input security, the password input interface can be specifically a password input interface dynamically delivered by the VR server.

For example, the password input interface can be specifically a random password input interface delivered by the VR server. For example, the random password input interface can be specifically an input interface that includes random input characters, an input interface of a random interface size, an input interface that includes input characters of random sizes, an input interface displayed at a random location in the virtual reality scenario, or an input interface that tilts at a random angle in the virtual reality scenario.

It is worthwhile to note that an interaction method used by the user to interact with the VR scenario to select an input character in the password input interface is not particularly limited. In practice, any form of interaction method can be used. For example, in an implementation, the user can keep the operation focus at a related input character in the input interface for specific duration to select the input character, and then trigger to complete an input operation of the input character.

In the present specification, the interactive environment authentication information can be specifically a hidden non-forged security mark used to mark an officially trusted VR interactive environment. The random information can specifically include any form of random information. Correspondingly, the interactive environment authentication information can specifically include any form of non-forged security information generated through calculation based on the random information delivered by the VR server.

According to the present invention, the random information is a random number string of a predetermined length, and the interactive environment authentication information is a coordinate sequence generated through mapping calculation based on the random number string. The coordinate sequence can be specifically a set of a series of coordinates generated when the operation focus is displaced during interaction between the user and the VR scenario.

In this case, a mapping algorithm used to perform mapping calculation on the random number string can be preloaded on the VR terminal. After decrypting the random number string delivered by the VR server, the VR terminal can separately perform mapping calculation on random numbers in the random number string based on the random algorithm, to generate all sets of mapping coordinates respectively corresponding to the random numbers in the random number string.

Each set of generated mapping coordinates can correspond to one password character in the password information that the user needs to enter in the VR scenario. For example, the target service is a fast payment service, and the password information is a 6-digit payment password. In this case, the random numbers in the random number string can be mapped to six sets of mapping coordinates corresponding to password characters by using the mapping algorithm.

It is worthwhile to note that calculation logic of the mapping algorithm is not particularly limited in the present specification, and can be specified by a person skilled in the art based on an actual demand.

In a shown implementation, for example, the target service is a fast payment service in the VR scenario, and the password information is a payment password. In this case, the mapping algorithm can be an algorithm for mapping every two random numbers in the random number string to one set of mapping coordinates corresponding to one password character in the payment password. That is, in the present specification, the length of the random number string used to generate the sets of mapping coordinates depends on a character length of the password information, and a relative relationship is maintained between the two lengths.

In this case, the mapping algorithm can be specifically represented by using the following equations:

$$x=(int(challenge[i*2])-4)/10;$$

and

$$y=(int(challenge[i*2+1])-4)/10,$$

where x represents an x-axis coordinate value of a set of mapping coordinates; y represents a y-axis coordinate value of the set of mapping coordinates; challenge represents the random number string; challenge[N] represents the Nth number in the random number string, for example, challenge[i*2] represents the (i*2)th random number in the random number string; a value range of i is [0, M-1]; challenge[0] represents the first random number in the random number string; and a value of M is one half of a value of the length of the random number string (that is, every two random numbers are mapped to one set of mapping coordinates).

For example, for a fast payment service of ALIPAY (Alipay) in a VR scenario, if a payment password of ALIPAY in the VR scenario is a short 6-digit password, the random number string can be a 12-digit random number string. In an example, assume that the random number string is 152587660579, based on the previous equations, the value range of i is [0, 5]. In this case, each number of i from 0 to 5 can be substituted into the previous equations for mapping calculation, and mapping calculation can be separately performed on the random numbers in the random number string to obtain sets of mapping coordinates. An obtained calculation result can be shown in the following table:

| i | challenge[i*2] | challenge[i*2+1] | result |
|---|---|---|---|
| 0 | challenge[0] | challenge[1] | [-0.3,0.1] |
| 1 | challenge[2] | challenge[3] | [-0.2,0.1] |
| 2 | challenge[4] | challenge[5] | [0.4, 0.3] |
| 3 | challenge[6] | challenge[7] | [0.2, 0.2] |
| 4 | challenge[8] | challenge[9] | [-0.4, 0.1] |
| 5 | challenge[10] | challenge[11] | [0.3, 0.5] |

In a shown implementation, after separately performing mapping calculation on the random numbers in the random number string based on the mapping algorithm to obtain the sets of mapping coordinates respectively corresponding to the password characters in the password information, the VR terminal can further generate a coordinate sequence based on these sets of mapping coordinates as the interactive environment authentication information.

In a shown method, specifically, the sets of mapping coordinates obtained through mapping calculation can be combined with the password input interface, and the sets of mapping coordinates can be used as offsets of the operation focus, to construct the coordinate sequence as the interactive environment authentication information.

During implementation, each time the user enters a password character in the password input interface, the VR terminal can use a set of mapping coordinates corresponding to the password character as an offset, to offset the operation focus in the VR scenario once, and record a set of coordinates generated after the operation focus is offset, until the user enters the complete password information. For example, the password information is a 6-digit payment password of ALIPAY In this case, the operation focus needs to be offset six times in total. Therefore, the VR terminal needs to record six sets of coordinates generated after the operation focus is offset.

To ensure that the VR server can restore the offsets through calculation, the VR terminal can define a fixed initial location for the operation focus in the password input interface.

In this case, after each time the user enters a password character in the password input interface, the VR terminal can determine a set of coordinates of the initial location, and then use a set of mapping coordinates corresponding to the password character entered by the user as an offset, to offset the set of coordinates of the initial location once. For example, an X-axis coordinate value and a Y-axis coordinate value of the set of coordinates of the initial location can be respectively used as an X-axis offset component and a Y-axis offset component, to offset the set of coordinates of the operation focus. A specific initial location in the password input interface is not specially limited in the present specification. In practice, any location in the password input interface can be specified as the initial location.

For example, in an implementation, the user keeps the operation focus at a related input character in the input interface for specific duration to select the input character, and then triggers to complete an input operation of the input character. In this case, a center location of a location area of the input character (namely, an area center of an input key corresponding to the input character) in the password input interface or another location easy to extract and recognize can be specified as the initial location. Therefore, after the user triggers input of the input character by controlling the operation focus to keep at the location area of the input character, the VR terminal can immediately keep the operation focus at the initial location, and then use the initial location as a reference offset point to perform offset once, and record a set of coordinates generated after the operation focus is offset.

An offset direction in which the VR terminal offsets the operation focus is not specially limited in the present specification, either. In practice, a set of mapping coordinates corresponding to a password character entered by the user can be used as an offset, to offset the operation focus in any direction.

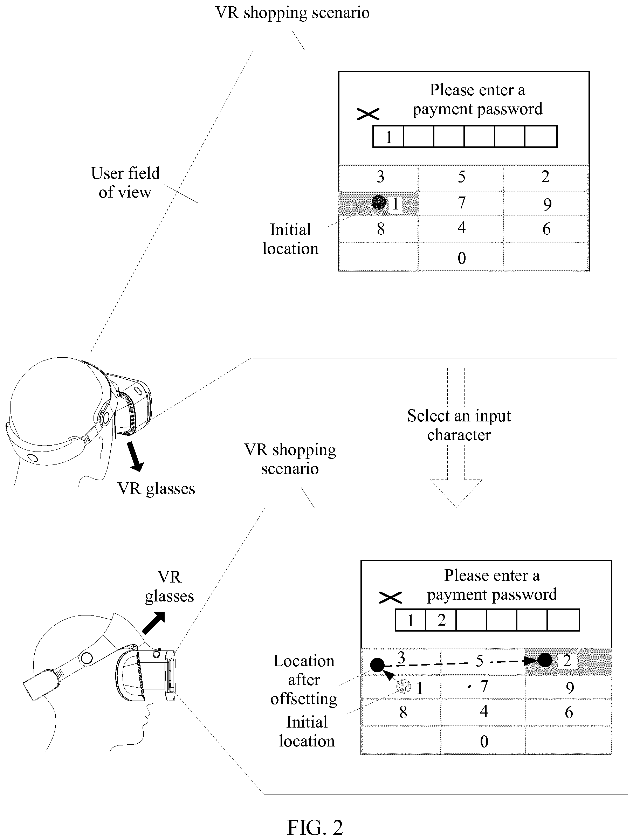

For example, FIG. 2 is a schematic diagram illustrating offsetting an operation focus by a user after the user enters a password character, according to an implementation of the present specification.

As shown in FIG. 2, for example, the password information is a 6-digit payment password of ALIPAY. Assume that the 6-digit payment password is 123456, the coordinate sequence used as the interactive environment authentication information is as follows:

{[-0.3, 0.1], [-0.2, 0.1], [0.4, 0.3], [0.2, 0.2], [-0.4, 0.1], [0.3, 0.5]}

In this case, each set of coordinates in the coordinate sequence corresponds to one password character in the 6-bit payment password.

Assume that the first password character 1 in the 6-bit payment password corresponds to the set of mapping coordinates [-0.3, 0.1], after the user controls the operation focus to move to an area of the input character 1 in the password input interface, and triggers to select the input character 1 to complete input of the password character 1, the VR terminal worn by the user can read a set of coordinates of an initial location of the operation focus in the password input interface in the background, and then use the X-axis value -0.3 of the sets of mapping coordinates [-0.3, 0.1] as an X-axis offset component of the operation focus and use the Y-axis value 0.1 of the set of mapping coordinates [-0.3, 0.1] as a Y-axis offset component of the operation focus, to offset the set of coordinates of the initial location once in a coordinate system in the VR scenario, that is, to offset an X-axis value of the set of coordinates of the initial location by 0.3 unit in a negative direction of an X axis in the coordinate system of the VR scenario, and offset a Y-axis value of the set of coordinates of the initial location by 0.1 unit in a positive direction of a Y axis in the coordinate system of the VR scenario. Subsequently, when continuing to input the second password character 2 in the 6-digit payment password, the user can continue to control the operation focus to move from a location that the operation focus is offset to after the password character 1 is entered to an area of the input character 2 in the password input interface, and continue to complete input of the password character 2, and so on, until input of the 6-digit payment password is completed.

In the present specification, after the user completes input of the password information in the password input interface, the VR terminal can join all recorded sets of coordinates generated after the operation focus is offset, to obtain a coordinate sequence. For example, the VR terminal can directly join all the sets of coordinates generated after the operation focus is offset in a sequence of the password characters in the password information that correspond to all the sets of coordinates generated after the operation focus is offset. In this case, the generated coordinate sequence is the interactive environment authentication information that ultimately needs to be submitted to the server for verification.

In this method, because the sets of mapping coordinates are generated through calculation based on the random number string delivered by the server, after the user enters a password character in the password input interface, a set of mapping coordinates corresponding to the password character is used as an offset, to offset the operation focus once, which is equivalent that the operation focus is randomly offset once. Therefore, the password information entered by the user in the password input interface can be prevented from being stolen by an illegal user by initiating a reconstruction attack.

For example, the reconstruction attack is an attack method in which an illegal user illegally steals interaction data (for example, head action data of the user) generated when the user enters information in the VR scenario, to restore a location and a track of the operation focus in the VR scenario, and then can restore the password characters entered by the user based on already-known layout information of the input characters in the password input interface. Each time the user enters a password character in the password input interface, the operation focus is randomly offset once. Therefore, even if an illegal user successfully steals interaction data generated when the user enters information in the VR scenario, a finally restored location of the visual focus is still different from an actual location of the visual focus, and therefore the illegal user cannot restore a real moving track of the visual focus based on the stolen interaction data. It can significantly reduce a success rate of obtaining the password information entered by the user by using a reconstruction attack.

In addition, the sets of mapping coordinates are used as offsets of the operation focus to offset the operation focus, and the coordinate sequence is constructed as the interactive environment authentication information based on the recorded sets of coordinates generated after the operation focus is offset. It can alleviate a security risk caused by directly constructing a coordinate sequence as the interactive environment authentication information based on the generated sets of mapping coordinates.

For example, directly using the coordinate sequence generated by joining the generated sets of mapping coordinates as the interactive environment authentication information is equivalent to performing no processing on the calculation result of the mapping algorithm. Therefore, if the coordinate sequence obtained by joining all the sets of mapping coordinates obtained through calculation by using the mapping algorithm is directly sent to the VR server as the interactive environment authentication information, once the mapping algorithm is leaked and an illegal user knows the mapping algorithm, the illegal user can perform reverse calculation on the interactive environment authentication information by using the mapping algorithm, to restore the random number string delivered by the VR server, causing a security risk.

An example in which the interactive environment authentication information is a coordinate sequence generated through mapping calculation based on the random number string is used above for detailed description.

It is worthwhile to further note that, in practice, in addition to the coordinate sequence generated through mapping calculation based on the random number string, the interactive environment authentication information can be another form of security information used to mark an officially trusted VR interactive environment. For example, the interactive environment authentication information can be information, such as an image or a sound, generated through calculation based on the random information. Examples are not listed one by one in the present specification.

Step 106: The VR terminal sends the password information and the interactive environment authentication information to the virtual reality server.

In the present specification, after the user enters the password information in the password input interface by interacting with the VR scenario, and the VR terminal generates the interactive environment authentication information through calculation based on the random information delivered by the VR server, the VR terminal can obtain the password information entered by the user and the interactive environment authentication information generated by the VR terminal through calculation in the background, and then send the obtained password information and interactive environment authentication information to the VR server.

For example, the interactive environment authentication information is a coordinate sequence generated through mapping calculation based on the random information. The VR terminal can combine the obtained password information and coordinate sequence into a coordinate sequence string, add the coordinate sequence string to a constructed response request, and return the response request to the VR server as a response to the random information delivered by the VR server.

In practice, when sending the obtained password information and interactive environment authentication information to the VR server, the VR terminal can alternatively encrypt the password information and the interactive environment authentication information and send encrypted information, and then the VR server can decrypt the encrypted information. Details of a specific encryption method and encryption algorithm are omitted in the present specification.

Step 108: The VR server verifies the password information, and if the password information is verified, obtains random information through reverse calculation based on the interactive environment authentication information, and verifies whether the random information obtained through reverse calculation matches the random information delivered by the virtual reality server.

Step 110: Determine that security authentication on an interactive environment of the VR scenario succeeds if the random information obtained through reverse calculation matches the random information delivered to the virtual reality terminal.

In the present specification, after receiving the password information and the interactive environment authentication information that are sent by the VR terminal, the VR server can first verify the password information. For example, the VR server can match the password information with password information reserved by the user on the VR server. If the password information is verified, identity authentication for the user succeeds, and the VR server can further enable verification on the interactive environment authentication information.

Certainly, if verification on the password information fails, the VR server can directly terminate the target service initiated by the user in the VR scenario, and return a service execution failure response message to the VR terminal.

Further, after identity authentication for the user succeeds, the VR server can continue to verify the interactive environment authentication information, to perform security authentication on the interactive environment of the VR scenario in which the user initiates the target service. A process in which the VR server verifies the interactive environment authentication information corresponds to the process in which the VR terminal generates the interactive environment authentication information.

In a shown implementation, the following example is still used: The interactive environment authentication information is a coordinate sequence constructed by combining the password input interface and the sets of mapping coordinates obtained by performing mapping calculation on the random number string delivered by the VR server based on the predetermined mapping algorithm and using the sets of mapping coordinates as offsets of the operation focus.

In this case, the interactive environment authentication information is a coordinate sequence obtained by using a set of mapping coordinates corresponding to a password character as an offset after the user enters the password character in the virtual reality scenario to offset the operation focus in the virtual reality scenario and joining all sets of coordinates generated after the operation focus is offset. The sets of mapping coordinates are generated by the VR terminal by separately performing mapping calculation on the random numbers in the random number string based on the predetermined mapping algorithm and correspond to the random numbers. Each set of mapping coordinates corresponds to one password character in the password information entered by the user.

First, the VR server can separately calculate offsets corresponding to the sets of coordinates in the coordinate sequence used as the interactive environment authentication information.

Specifically, the VR terminal can notify the previous pre-specified initial location to the VR server, and when calculating the offsets corresponding to the sets of coordinates in the coordinate sequence used as the interactive environment authentication information, the VR server can determine a set of coordinates corresponding to the initial location in the password input interface based on the initial location and with reference to layout information that is of the password input interface and that is maintained on the VR server. In this case, the set of coordinates is the set of coordinates of the initial location of the operation focus existing before the operation focus is offset in the password input interface on the VR terminal side in the VR scenario.

For example, in an implementation, the user keeps the operation focus at a related input character in the input interface for specific duration to select the input character, and then triggers to complete an input operation of the input character. In this case, the VR terminal can define a center location of a location area of the input character in the password input interface as the initial location, and notify the VR server of the initial location. When the VR server needs to calculate an offset corresponding to any set of coordinates in the coordinate sequence used as the interactive environment authentication information, the VR server can determine, based on the locally maintained layout information of the password input interface, a location area of a password character (that is, a location area corresponding to an input key corresponding to the input character) corresponding to the set of coordinates in the password input interface, and then further determine a set of coordinates of a center location of the location area, to obtain the set of coordinates of the initial location.

After determining the set of coordinates of the initial location, the VR server can calculate corresponding offsets based on the set of coordinates of the initial location and the sets of coordinates in the coordinate sequence used as the interactive environment authentication information. For example, the set of coordinates of the initial location represents a set of coordinates existing before the operation focus is offset, and the sets of coordinates in the coordinate sequence represent coordinates generated after the operation focus is offset. Therefore, an offset of the operation focus relative to the X axis and the Y axis can be obtained by calculating an X-axis coordinate value and a Y-axis coordinate value of a set of coordinates generated after the operation focus is offset and an X-axis coordinate value and a Y-axis coordinate value of a set of coordinates existing before the operation focus is offset.

The offsets are the sets of mapping coordinates obtained by the VR terminal by performing mapping calculation on the random number string based on the predetermined mapping algorithm. Therefore, after obtaining the offsets corresponding to the sets of coordinates in the coordinate sequence used as the interactive environment authentication information, the VR server can obtain original sets of mapping coordinates obtained by the VR terminal by performing mapping calculation on the random number string based on the predetermined mapping algorithm.

In the present specification, the same mapping algorithm can also be loaded on the VR server as the VR terminal. After obtaining the original sets of mapping coordinates obtained by the VR terminal by performing mapping calculation on the random number string based on the predetermined mapping algorithm, the VR server can perform reverse calculation on the original sets of mapping coordinates corresponding to the password characters based on the same mapping algorithm, to generate random numbers corresponding to the original sets of mapping coordinates.

For example, the mapping algorithm is still represented by using the following equations:

$$x = (int(challenge[i*2]) - 4)/10;$$

and

$$y = (int(challenge[i*2+1]) - 4)/10.$$

Details of meanings of the parameters in the previous equations are omitted in the present specification. A process of performing reverse calculation on the original sets of mapping coordinates based on the mapping algorithm is a process of substituting x-axis coordinate values and y-axis coordinate values of the original sets of mapping coordinates into the previous equations to inversely obtain challenge[i*2] and challenge[i*2+1]. A specific calculation process is omitted in the present specification.

In the present specification, after obtaining the random numbers corresponding to the original sets of mapping coordinates through reverse calculation, the VR server can join these random numbers to obtain a random number string, and then match the obtained random number string against the random number string delivered by the VR server to the VR terminal. If the obtained random number string matches the random number string delivered by the VR server to the VR terminal, it indicates that security authentication on the interactive environment of the VR scenario in which the user initiates the target service succeeds, and the interactive environment is an officially trusted VR interactive environment. In this case, the VR server can normally respond to and execute the target service initiated by the VR terminal, and return a service execution result to the VR terminal.

On the contrary, if the obtained random number string does not match the random number string delivered by the VR server to the VR terminal, it indicates that security authentication on the interactive environment of the VR scenario in which the user initiates the target service fails, and the interactive environment is an illegal VR interactive environment. In this case, a user field of view in the VR scenario may be hijacked by a malicious program, and the VR server can directly terminate the target service initiated by the user in the VR scenario, and return a service execution failure response message to the VR terminal.

It can be learned that in this method, on a basis that the VR server completes user identity authentication based on the password information entered by the user, the virtual reality server can further perform, based on the interactive environment authentication information that is sent in synchronization with the password information, security authentication on the interactive environment of the VR scenario in which the user enters the password information, to determine whether the current interactive environment is a legal interactive environment, thereby alleviating a security risk that the user faces when performing service interaction in an illegal VR interactive environment.

The following describes the technical solutions of the present specification by using an example in which the target service is a fast payment service in a VR scenario and with reference to an application scenario in which a user enters a payment password in a password input interface output in the VR scenario during VR shopping experience to perform fast and secure payment in the VR scenario.

Certainly, it is worthwhile to note that the shown application scenario is merely an example and is not intended for limitation. Apparently, in practice, the technical solutions of this application can also be applied to another similar service scenario.

For example, a user quickly completes recharging of a game currency in a VR game scenario, a user quickly completes a reward in a VR live broadcast scenario, a user quickly completes video payment on demand in a VR video scenario, and a user quickly unlocks a VR terminal in a VR scenario. Examples are not listed one by one.

In this scenario, the VR terminal can be specifically a head-mounted VR terminal that a payment client (such as ALIPAY VR pay) developed based on the VR technology is installed, and the VR server can be a payment server, for example, a payment platform constructed based on a server cluster.

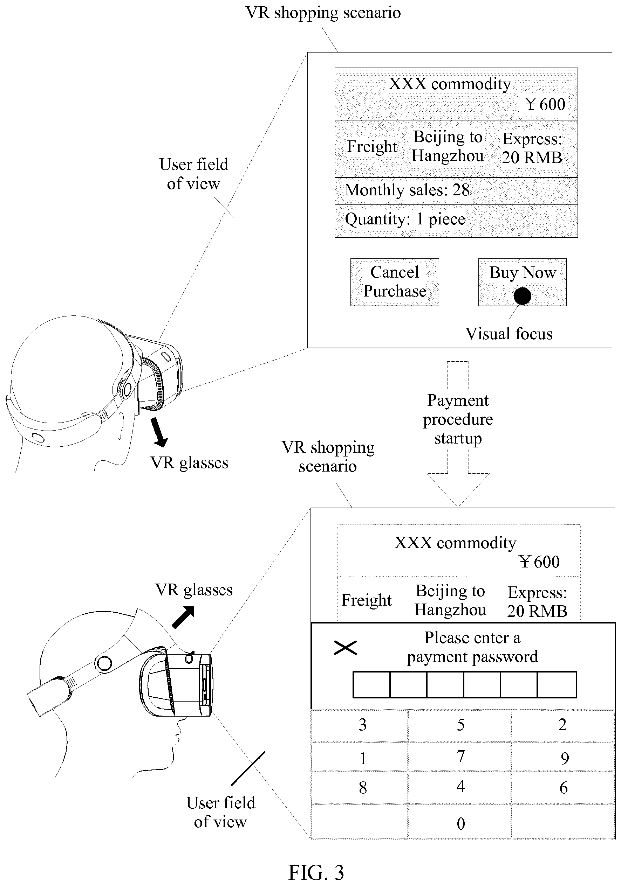

FIG. 3 is a schematic interaction diagram illustrating completing fast payment by a user in a VR scenario, according to an implementation of the present specification.

In an initial state, the user can log in to the VR terminal by using a payment account, set a payment password in a VR scenario output by the VR terminal, bind the set payment password to the payment account, and store the set payment password in a secure database on the payment server on the cloud.

When the user wears the VR terminal for VR shopping experience, optional commodities can be presented to the user in the VR scenario, and the user can view a commodity list provided in the VR scenario, to select a commodity that the user likes for purchasing.

Still referring to FIG. 3, after the user selects a satisfactory commodity from the commodity list, by using an interaction method of controlling an operation focus by using a head action, the user can suspend and keep, for N seconds, a visual focus at an area of a "Buy Now" button pre-provided in the VR scenario, to trigger the VR client to start a payment procedure for the commodity.

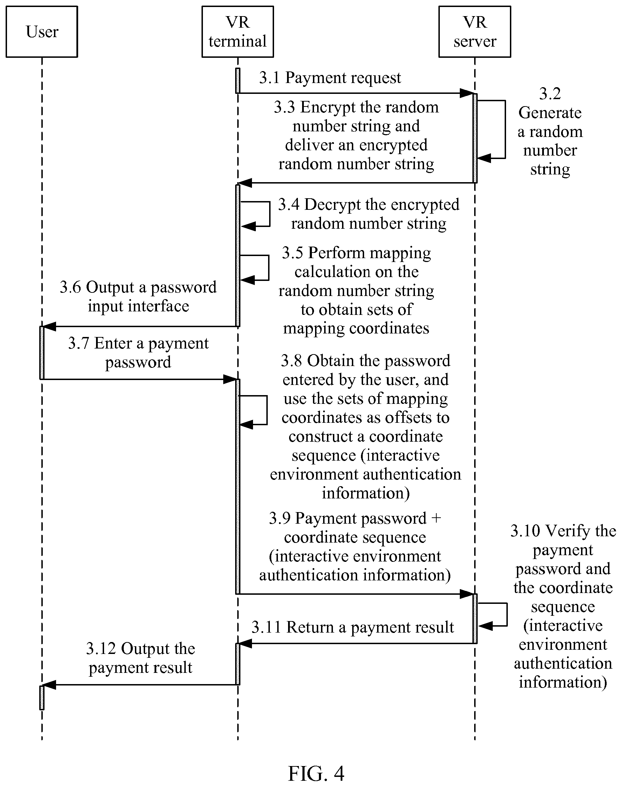

FIG. 4 is a schematic diagram illustrating completing security authentication on a VR payment environment through interaction between a VR server and a VR terminal, according to an implementation of the present specification.

As shown in FIG. 4, after the payment procedure for the commodity is started, the VR terminal can initiate a payment request to the VR server by using the mounted payment client. After receiving the payment request, the VR server can generate a 12-bit random number string for the VR terminal based on a loaded random algorithm, and encrypt the random number string and then deliver an encrypted random number string to the VR terminal.

After receiving the encrypted random number string, the VR terminal can decrypt the encrypted random number string, and separately perform mapping calculation on random numbers in the random number string based on a loaded mapping algorithm, to obtain six sets of mapping coordinates respectively corresponding to password characters in the payment password (an example in which every two random numbers are mapped to one set of mapping coordinates is still used).

Still referring to FIG. 4, when completing the mapping calculation, the VR terminal can output, by using the VR scenario, a password input box delivered by the VR server, and obtain a password character entered by the user in the password input box. In addition, the VR terminal can combine the sets of mapping coordinates obtained through calculation with the password input box delivered by the VR server, and use the sets of mapping coordinates as offsets of the operation focus, to construct a coordinate sequence as interactive environment authentication information.

Specifically, the VR terminal can still use the following method: Each time the user enters a password character in the password input interface, the VR terminal uses a set of mapping coordinates corresponding to the password character as an offset to offset the operation focus in the VR scenario once, and records a set of coordinates generated after the operation focus is offset, and then the VR terminal joins recorded sets of coordinates generated after the operation focus is offset, to obtain a coordinate sequence as the interactive environment authentication information. A detailed implementation process is omitted, and references can be made to the description in the previous implementations.

Still referring to FIG. 4, after obtaining the payment password entered by the user and constructing the interactive environment authentication information, the VR terminal can send the payment password and the interactive environment authentication information to the server as a response to the random number string delivered by the VR server, for verification by the server.

On one hand, the server can first verify the payment password. If verification on the payment password fails, the server can directly return a payment failure message to the VR terminal.

On the other hand, if the payment password is verified, the server can further verify the interactive environment authentication information. First, the VR server can separately calculate offsets corresponding to the sets of coordinates in the interactive environment authentication information, to eliminate coordinate errors of every set of coordinates in the interactive environment authentication information due to offset of the operation focus, and restore original sets of mapping coordinates corresponding to the password characters in the payment password. In addition, based on the same mapping algorithm as the VR client, the VR server can perform reverse calculation on the original sets of mapping coordinates to obtain corresponding random numbers, and join the obtained random numbers to obtain a random number string. A detailed implementation process is omitted, and references can be made to the description in the previous implementations.

After obtaining the random number string by joining the obtained random numbers, the VR server can match the random number string against the random number string delivered to the VR terminal. Still referring to FIG. 3, if the obtained random number string matches the random number string delivered by the VR server to the VR terminal, it indicates that a VR interactive environment in which the user initiates the fast payment service is an officially trusted VR interactive environment. In this case, the VR server can normally respond to and execute the payment request initiated by the VR terminal, and return a payment result to the VR terminal; and the VR terminal can output the payment result to the user in the VR scenario.

On the contrary, if the obtained random number string does not match the random number string delivered by the VR server to the VR terminal, it indicates that a VR interactive environment in which the user initiates the fast payment service may be an illegal VR interactive environment. In this case, a user field of view in the VR scenario may be hijacked by an illegal user, and a shopping interface output by the VR terminal by using the VR scenario may be a phishing or fraud interface. In this case, the VR server can directly terminate the fast payment service initiated by the user in the VR scenario, and output a corresponding prompt to the user in the VR scenario by using the VR terminal. For example, the prompt can be a text prompt "The transaction is at a security risk and the system has helped you terminate the transaction".

It can be learned that, in this method, when the user completes fast payment in the VR scenario, on a basis that the VR server completes user identity authentication based on the password information entered by the user, the VR server can further perform security authentication on the interactive environment of the VR scenario in which the user enters the password information, to quickly discover attack behavior, such as phishing or fraud, that the user may encounter when the user performs fast payment in the VR scenario, thereby maximally ensuring security of a fund of the user.

Corresponding to the previous method implementations, the present specification further provides an implementation of a virtual reality scenario-based authentication apparatus.

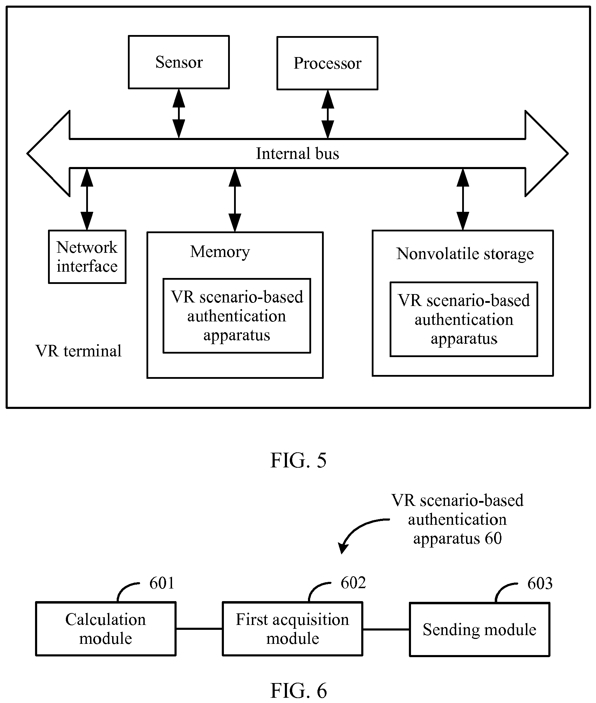

The implementation of the VR scenario-based authentication apparatus in the present specification can be applied to a VR terminal. The apparatus implementation can be implemented by using software, hardware, or a combination of hardware and software. Software implementation is used as an example. As a logical apparatus, the software is formed by reading a corresponding computer program instruction from a nonvolatile storage to a memory for running by a processor in a VR terminal that the software belongs to. In terms of hardware, FIG. 5 is a structural hardware diagram illustrating a VR terminal that a VR scenario-based authentication apparatus belongs to, according to an implementation of the present specification. In addition to a processor, a memory, a network interface, and a nonvolatile storage shown in FIG. 5, the VR terminal that the apparatus belongs to in this implementation can usually further include other hardware based on an actual function of the VR terminal. Details are omitted.

FIG. 6 is a block diagram illustrating a VR scenario-based authentication apparatus, according to an example implementation of the present specification.

Referring to FIG. 6, virtual reality scenario-based authentication apparatus 60 can be applied to the VR terminal shown in FIG. 5, and includes calculation module 601, first acquisition module 602, and sending module 603.

Calculation module 601 is configured to calculate interactive environment authentication information based on random information delivered by a virtual reality server.

First acquisition module 602 is configured to obtain password information entered by a user in a virtual reality scenario.

Sending module 603 is configured to send the password information and the interactive environment authentication information to the virtual reality server, so that the virtual reality server obtains random information through reverse calculation based on the interactive environment authentication information after the password information is verified, and matches the random information obtained through reverse calculation against the random information delivered to a virtual reality client, to perform security authentication on an interactive environment of the virtual reality scenario.

According to the invention, the random information is a random number string of a predetermined length, and the interactive environment authentication information is a coordinate sequence generated through mapping calculation based on the random number string.

In this implementation, calculation module 601 is configured to: separately perform mapping calculation on random numbers in the random number string based on a predetermined mapping algorithm, to generate all sets of mapping coordinates respectively corresponding to the random numbers, where each set of mapping coordinates is used as an offset corresponding to each password character and is used to offset an operation focus in the virtual reality scenario by an offset corresponding to a password character after the user enters the password character in the virtual reality scenario, and join all sets of coordinates generated after the operation focus is offset, to obtain the coordinate sequence.

In this implementation, calculation module 601 is further configured to: determine a set of coordinates of an initial location of the operation focus in a password input interface in the virtual reality scenario, and use a set of mapping coordinates corresponding to the password character as an offset to offset the set of coordinates of the initial location once.

In this implementation, the mapping algorithm is represented by using the following equations:

$$x=(int(challenge[i*2])-4)/10;$$

and

$$y=(int(challenge[i*2+1])-4)/10,$$

where

x represents an x-axis coordinate value of a set of mapping coordinates; y represents a y-axis coordinate value of the set of mapping coordinates; challenge represents the random number string; challenge[N] represents the Nth number in the random number string; a value range of i is [0, M-1]; and a value of M is one half of a value of the length of the random number string.

Corresponding to the previous method implementations, the present specification further provides an implementation of another virtual reality scenario-based authentication apparatus.

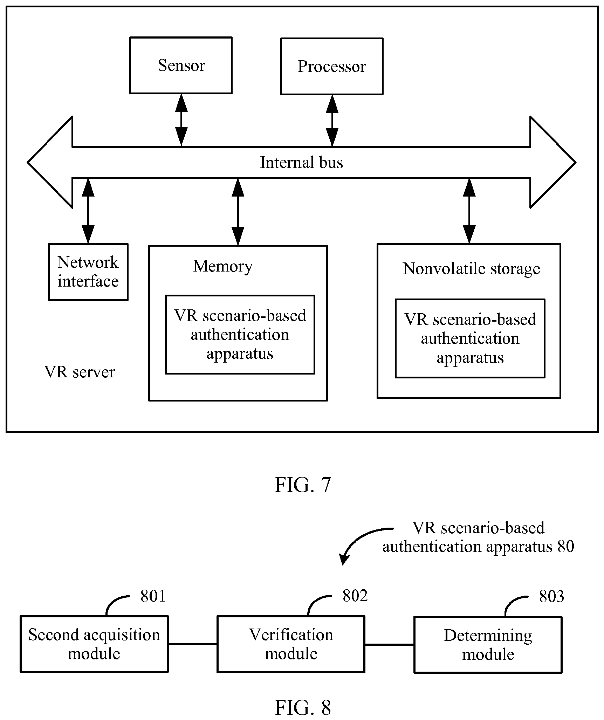

The implementation of the VR scenario-based authentication apparatus in the present specification can be applied to a VR server. The apparatus implementation can be implemented by using software, hardware, or a combination of hardware and software. Software implementation is used as an example. As a logical apparatus, the software is formed by reading a corresponding computer program instruction from a nonvolatile storage to a memory for running by a processor in a VR server that the software belongs to. In terms of hardware, FIG. 7 is a structural hardware diagram illustrating a VR terminal that a VR scenario-based authentication apparatus belongs to, according to an implementation of the present specification. In addition to a processor, a memory, a network interface, and a nonvolatile storage shown in FIG. 7, the VR terminal that the apparatus belongs to in this implementation can usually further include other hardware based on an actual function of the VR terminal. Details are omitted.

FIG. 8 is a block diagram illustrating a VR scenario-based authentication apparatus, according to an example implementation of the present specification.

Referring to FIG. 8, virtual reality scenario-based authentication apparatus 80 can be applied to the VR terminal shown in FIG. 7, and includes second acquisition module 801, verification module 802, and determining module 803.

Second acquisition module 801 is configured to obtain interactive environment authentication information and password information entered by a user in a virtual reality scenario that are sent by a virtual reality terminal, where the interactive environment authentication information is generated through calculation based on random information delivered to the virtual reality terminal.

Verification module 802 is configured to verify the password information, and if the password information is verified, obtain random information through reverse calculation based on the interactive environment authentication information, and verify whether the random information obtained through reverse calculation matches the random information delivered by the virtual reality server.

Determining module 803 is configured to determine that security authentication on an interactive environment of the virtual reality scenario succeeds if the random information obtained through reverse calculation matches the random information delivered to the virtual reality terminal.

According to the invention, the random information is a random number string of a predetermined length, and the interactive environment authentication information is a coordinate sequence generated through mapping calculation based on the random number string.

In this implementation, the interactive environment authentication information is a coordinate sequence obtained by using a set of mapping coordinates corresponding to a password character as an offset after the user enters the password character in the virtual reality scenario to offset an operation focus in the virtual reality scenario and joining all sets of coordinates generated after the operation focus is offset, and all sets of mapping coordinates are generated by separately performing mapping calculation on random numbers in the random number string based on a predetermined mapping algorithm and respectively correspond to the random numbers.

In this implementation, verification module 802 is configured to: separately calculate offsets corresponding to the sets of coordinates in the coordinate sequence, to obtain sets of mapping coordinates corresponding to password characters in the password information, and separately perform reverse calculation on the original sets of mapping coordinates corresponding to the password characters based on the predetermined mapping algorithm, to generate random numbers respectively corresponding to the sets of mapping coordinates.

In this implementation, verification module 802 is further configured to: determine a set of coordinates of an initial location of the operation focus existing before the operation focus is offset in a password input interface in the virtual reality scenario, and calculate the corresponding offsets based on the set of coordinates of the initial location and the sets of coordinates in the coordinate sequence.

In this implementation, the mapping algorithm is represented by using the following equations:

$$x = (int(challenge[i*2]) - 4)/10;$$

and

$$y = (int(challenge[i*2+1]) - 4)/10,$$

where

x represents an x-axis coordinate value of a set of mapping coordinates; y represents a y-axis coordinate value of the set of mapping coordinates; challenge represents the random number string; challenge[N] represents the Nth number in the random number string; a value range of i is [0, M-1]; and a value of M is one half of a value of the length of the random number string.

For a detailed implementation process of a function of each module in the apparatus, references can be made to an implementation process of a corresponding step in the previous method. Details are omitted here.

Because an apparatus implementation basically corresponds to a method implementation, for a related part, references can be made to some descriptions in the method implementation. The previously described apparatus implementations are merely examples. The units described as separate parts may or may not be physically separate, and parts displayed as units may or may not be physical units, that is, may be located in one location, or may be distributed on a plurality of network units. Some or all of the modules can be selected based on an actual demand to achieve the objectives of the solutions of the present specification. A person of ordinary skill in the art can understand and implement the implementations of the present specification without creative efforts.

The system, apparatus, module, or unit illustrated in the previous implementations can be specifically implemented by using a computer chip or an entity, or by using a product having a certain function. A typical implementation device is a computer, and the computer can be specifically a server, a personal computer, a laptop computer, a cellular phone, a camera phone, a smartphone, a personal digital assistant, a media player, a navigation device, an email receiving and sending device, a game console, a tablet computer, a wearable device, or any combination of these devices.

Corresponding to the previous method implementations, the present specification further provides an implementation of a VR terminal device. The VR terminal device includes a processor and a storage configured to store a machine-executable instruction. The processor and the storage are usually connected to each other by using an internal bus. In another possible implementation, the device may further include an external interface, so that the device can communicate with another device or component.

In this implementation, a machine-executable instruction that is stored in the storage and that corresponds to control logic of virtual reality scenario-based authentication is read and executed to prompt the processor to: calculate interactive environment authentication information based on random information delivered by a virtual reality server, obtain password information entered by a user in a virtual reality scenario, and send the password information and the interactive environment authentication information to the virtual reality server, so that the virtual reality server obtains random information through reverse calculation based on the interactive environment authentication information after the password information is verified, and matches the random information obtained through reverse calculation against the random information delivered to a virtual reality client, to perform security authentication on an interactive environment of the virtual reality scenario.

According to the invention, the random information is a random number string of a predetermined length, and the interactive environment authentication information is a coordinate sequence generated through mapping calculation based on the random number string.

In this implementation, the machine-executable instruction that is stored in the storage and that corresponds to the control logic of virtual reality scenario-based authentication is read and executed, to further prompt the processor to: separately perform mapping calculation on random numbers in the random number string based on a predetermined mapping algorithm, to generate all sets of mapping coordinates respectively corresponding to the random numbers, where each set of mapping coordinates is used as an offset corresponding to each password character and is used to offset an operation focus in the virtual reality scenario by an offset corresponding to a password character after the user enters the password character in the virtual reality scenario, and join all sets of coordinates generated after the operation focus is offset, to obtain the coordinate sequence.

In this implementation, the machine-executable instruction that is stored in the storage and that corresponds to the control logic of virtual reality scenario-based authentication is read and executed, to further prompt the processor to: determine a set of coordinates of an initial location of the operation focus in a password input interface in the virtual reality scenario, and use a set of mapping coordinates corresponding to the password character as an offset to offset the set of coordinates of the initial location once.

In this implementation, the mapping algorithm is represented by using the following equations:

$$x=(int(challenge[i*2])-4)/10;$$

and

$$y=(int(challenge[i*2+1])-4)/10,$$

where

x represents an x-axis coordinate value of a set of mapping coordinates; y represents a y-axis coordinate value of the set of mapping coordinates; challenge represents the random number string; challenge[N] represents the Nth number in the random number string; a value range of i is [0, M-1]; and a value of M is one half of a value of the length of the random number string.

Corresponding to the previous method implementations, the present specification further provides an implementation of a VR server. The VR server includes a processor and a storage configured to store a machine-executable instruction. The processor and the storage are usually connected to each other by using an internal bus. In another possible implementation, the device may further include an external interface, so that the device can communicate with another device or component.

In this implementation, a machine-executable instruction that is stored in the storage and that corresponds to control logic of virtual reality scenario-based authentication is read and executed, to prompt the processor to: obtain interactive environment authentication information and password information entered by a user in a virtual reality scenario that are sent by a virtual reality terminal, where the interactive environment authentication information is generated through calculation based on random information delivered to the virtual reality terminal, verify the password information, and if the password information is verified, obtain random information through reverse calculation based on the interactive environment authentication information, and verify whether the random information obtained through reverse calculation matches the random information delivered by the virtual reality server, and determine that security authentication on an interactive environment of the virtual reality scenario succeeds if the random information obtained through reverse calculation matches the random information delivered to the virtual reality terminal.

According to the invention, the random information is a random number string of a predetermined length, and the interactive environment authentication information is a coordinate sequence generated through mapping calculation based on the random number string.

In this implementation, the machine-executable instruction that is stored in the storage and that corresponds to the control logic of virtual reality scenario-based authentication is read and executed, to further prompt the processor to: separately calculate offsets corresponding to the sets of coordinates in the coordinate sequence, to obtain sets of mapping coordinates corresponding to password characters in the password information, separately perform reverse calculation on the sets of mapping coordinates corresponding to the password characters based on the predetermined mapping algorithm, to generate random numbers respectively corresponding to the sets of mapping coordinates, and join the generated random numbers to obtain the random number string.

In this implementation, the machine-executable instruction that is stored in the storage and that corresponds to the control logic of virtual reality scenario-based authentication is read and executed, to further prompt the processor to: determine a set of coordinates of an initial location of the operation focus existing before the operation focus is offset in a password input interface in the virtual reality scenario, and calculate the corresponding offsets based on the set of coordinates of the initial location and the sets of coordinates in the coordinate sequence.

In this implementation, the mapping algorithm is represented by using the following equations:

$$x=(int(challenge[i*2])-4)/10;$$

and

$$y=(int(challenge[i*2+1])-4)/10,$$

where

x represents an x-axis coordinate value of a set of mapping coordinates; y represents a y-axis coordinate value of the set of mapping coordinates; challenge represents the random number string; challenge[N] represents the Nth number in the random number string; a value range of i is [0, M-1]; and a value of M is one half of a value of the length of the random number string.

A person skilled in the art can easily figure out other implementations of the present specification after considering the specification and practicing the present specification here. The present specification is intended to cover any variations, uses, or adaptations of the present specification, and these variations, uses, or adaptations follow the general principles of the present specification and include common knowledge or conventional techniques that are not disclosed in the technical field of the present specification.

It should be understood that the present specification is not limited to the previously described precise structures shown in the drawings, and various modifications and changes can be made. The scope of the present specification is limited by the appended claims only.

Specific implementations of the present specification are described above. In some cases, the actions or steps recorded in the claims can be performed in an order different from the order in the implementations and the desired results can still be achieved. In addition, the process depicted in the accompanying drawings does not necessarily require a particular execution order to achieve the desired results. In some implementations, multi-tasking and parallel processing may be advantageous.

**Claims**

1.  A method for virtual reality scenario-based authentication, applied to a virtual reality server, wherein the method comprises:

    obtaining interactive environment authentication information and password information entered by a user in a virtual reality scenario that are sent by a virtual reality terminal, wherein the interactive environment authentication information is generated through calculation based on random information delivered to the virtual reality terminal;
    verifying (108) the password information; and when the password information is verified, obtaining random information through reverse calculation based on the interactive environment authentication information, and verifying whether the reverse-calculated random information matches the delivered random information; and
    determining (110) that security authentication on an interactive environment of the virtual reality scenario succeeds when the reverse-calculated random information matches the delivered random information,
    wherein the delivered random information is a random number string of a predetermined length, and the interactive environment authentication information is a coordinate sequence that is obtained by using a set of mapping coordinates corresponding to a password character to offset an operation focus in the virtual reality scenario after the user enters the password character in the virtual reality scenario and by joining all sets of coordinates generated after the operation focus is offset, and wherein all sets of mapping coordinates are generated by separately performing mapping calculation on random numbers in the random number string based on a predetermined mapping algorithm and wherein all sets of mapping coordinates respectively correspond to the random numbers, wherein the operation focus is the visual focus in the virtual reality scenario controlled by the user.

2.  The method according to claim 1, wherein the method further comprises:

    receiving a service request sent by the virtual reality terminal when the virtual reality terminal detects that the user triggers a target service in the virtual reality scenario;
    generating the delivered random information in response to the received service request; and
    encrypting the generated random information and then delivering encrypted random information to the virtual reality terminal.

3.  The method according to claim 1 or 2, wherein the obtaining random information through reverse calculation based on the interactive environment authentication information comprises:

    separately calculating offsets corresponding to the sets of coordinates in the coordinate sequence, to obtain sets of mapping coordinates corresponding to password characters in the password information;
separately performing reverse calculation on the sets of mapping coordinates corresponding to the password characters based on the predetermined mapping algorithm, to generate random numbers respectively corresponding to the sets of mapping coordinates; and
joining the generated random numbers to obtain the random number string.

4. The method according to claim 3, wherein the separately calculating offsets corresponding to the sets of coordinates in the coordinate sequence comprises:

determining a set of coordinates of an initial location of the operation focus existing before the operation focus is offset in a password input interface in the virtual reality scenario; and
calculating the corresponding offsets based on the set of coordinates of the initial location and the sets of coordinates in the coordinate sequence.

5. The method for virtual reality scenario-based authentication according to claim 1, wherein the method is performed in a system including the virtual reality server and the virtual reality terminal, wherein the method further comprises:

calculating (102), by the virtual reality terminal, the interactive environment authentication information based on the delivered random information;
obtaining (104), by the virtual reality terminal, the password information entered by the user in the virtual reality scenario; and
sending (106), by the virtual reality terminal, the password information and the interactive environment authentication information to the virtual reality server.

6. The method according to claim 5, wherein the method further comprises:

sending, by the virtual reality terminal, a service request to the virtual reality server when detecting that the user triggers a target service in the virtual reality scenario; and
obtaining, by the virtual reality terminal, encrypted random information delivered by the virtual reality server when the virtual reality server receives the service request, and decrypting the obtained random information.

7. The method according to claim 5, wherein the offsetting an operation focus in the virtual reality scenario by an offset corresponding to a password character comprises:

determining a set of coordinates of an initial location of the operation focus in a password input interface in the virtual reality scenario; and
using a set of mapping coordinates corresponding to the password character as an offset to offset the set of coordinates of the initial location once.

8. A virtual reality server device, configured to perform a method according to any one of claims 1 to 4.

9. At least one computer-readable storage storing machine-executable instructions, wherein the machine-executable instructions, when executed by a computing device, configure the computing device to perform a method according to any one of the claims 1 to 4.

**Patentansprüche**

1. Verfahren für die Authentifizierung auf der Grundlage eines Virtual-Reality-Szenariums, angewendet auf einen Virtual-Reality-Server, wobei das Verfahren Folgendes umfasst:

Erhalten von Authentifizierungsinformationen einer interaktiven Umgebung und von Passwortinformationen, die durch einen Anwender in einem Virtual-Reality-Szenarium eingegeben werden, die durch ein Virtual-Reality-Endgerät gesendet werden, wobei die Authentifizierungsinformationen einer interaktiven Umgebung durch Berechnung auf der Grundlage von Zufallsinformationen, die an das Virtual-Reality-Endgerät geliefert werden, erzeugt werden;
Verifizieren (108) der Passwortinformationen; und wenn die Passwortinformationen verifiziert werden, Erhalten von Zufallsinformationen durch Rückwärtsberechnung auf der Grundlage der Authentifizierungsinformationen einer interaktiven Umgebung, und Verifizieren, ob die rückwärts berechneten Zufallsinformationen zu den gelieferten Zufallsinformationen passen; und

Bestimmen (110), dass die Sicherheitsauthentifizierung in einer interaktiven Umgebung des Virtual-Reality-Szenariums erfolgreich ist, wenn die rückwärts berechneten Zufallsinformationen zu den gelieferten Zufallsinformationen passen,

wobei die gelieferten Zufallsinformationen eine Zufallszahlfolge mit einer vorgegebenen Länge sind, und wobei die Authentifizierungsinformationen einer interaktiven Umgebung eine Koordinatenfolge sind, die durch Verwenden einer Menge von Abbildungskoordinaten, die einem Passwortzeichen entsprechen, um einen Betriebsfokus in dem Virtual-Reality-Szenarium zu versetzen, nachdem der Anwender das Passwortzeichen in dem Virtual-Reality-Szenarium eingegeben hat, und durch Verbinden aller Sätze von Koordinaten, die erzeugt werden, nachdem der Betriebsfokus versetzt worden ist, erhalten wird, und wobei alle Sätze von Abbildungskoordinaten durch getrenntes Ausführen einer Abbildungsberechnung an Zufallszahlen in der Zufallszahlenfolge auf der Grundlage eines vorgegebenen Abbildungsalgorithmus erzeugt werden und wobei alle Mengen von Abbildungskoordinaten jeweils den Zufallszahlen entsprechen, wobei der Betriebsfokus der visuelle Fokus in dem durch den Anwender gesteuerten Virtual-Reality-Szenarium ist.

2. Verfahren nach Anspruch 1, wobei das Verfahren ferner Folgendes umfasst:

Empfangen einer Dienstanforderung, die durch das Virtual-Reality-Endgerät gesendet wird, wenn das Virtual-Reality-Endgerät detektiert, dass der Anwender einen Zieldienst in dem Virtual-Reality-Szenarium auslöst; Erzeugen der gelieferten Zufallsinformationen in Ansprechen auf die empfangene Dienstanforderung; und Verschlüsseln der erzeugten Zufallsinformationen und daraufhin Liefern der verschlüsselten Zufallsinformationen an das Virtual-Reality-Endgerät.

3. Verfahren nach Anspruch 1 oder 2, wobei das Erhalten von Zufallsinformationen durch Rückwärtsberechnung auf der Grundlage der Authentifizierungsinformationen einer interaktiven Umgebung Folgendes umfasst:

getrenntes Berechnen von Versätzen entsprechend den Mengen von Koordinaten in der Koordinatenfolge, um Mengen von Abbildungskoordinaten zu erhalten, die Passwortzeichen in den Passwortinformationen entsprechen; getrenntes Ausführen der Rückwärtsberechnung an den Mengen von Abbildungskoordinaten, die den Passwortzeichen entsprechen, auf der Grundlage des vorgegebenen Abbildungsalgorithmus, um jeweils Zufallszahlen zu erzeugen, die den Mengen von Abbildungskoordinaten entsprechen; und Verbinden der erzeugten Zufallszahlen, um die Zufallszahlenfolge zu erhalten.

4. Verfahren nach Anspruch 3, wobei das getrennte Berechnen von Versätzen, die den Mengen von Koordinaten in der Koordinatenfolge entsprechen, Folgendes umfasst:

Bestimmen einer Menge von Koordinaten eines Anfangsorts des Betriebsfokus, der vorhanden ist, bevor der Betriebsfokus versetzt wird, in einer Passworteingabeschnittstelle in dem Virtual-Reality-Szenarium; und Berechnen der entsprechenden Versätze auf der Grundlage der Menge von Koordinaten des Anfangsorts und der Mengen von Koordinaten in der Koordinatenfolge.

5. Verfahren für die Authentifizierung auf der Grundlage eines Virtual-Reality-Szenariums nach Anspruch 1, wobei das Verfahren in einem System ausgeführt wird, das den Virtual-Reality-Server und das Virtual-Reality-Endgerät enthält, wobei das Verfahren ferner Folgendes umfasst:

Berechnen (102) der Authentifizierungsinformationen einer interaktiven Umgebung auf der Grundlage der gelieferten Zufallsinformationen durch das Virtual-Reality-Endgerät; Erhalten (104) der durch den Anwender in dem Virtual-Reality-Szenarium eingegebenen Passwortinformationen durch das Virtual-Reality-Endgerät; und Senden (106) der Passwortinformationen und der Authentifizierungsinformationen einer interaktiven Umgebung an den Virtual-Reality-Server durch das Virtual-Reality-Endgerät.

6. Verfahren nach Anspruch 5, wobei das Verfahren ferner Folgendes umfasst:

Senden einer Dienstanforderung an den Virtual-Reality-Server durch das Virtual-Reality-Endgerät, wenn detektiert wird, dass der Anwender einen Zieldienst in dem Virtual-Reality-Szenarium auslöst; und

Erhalten verschlüsselter Zufallsinformationen, die durch den Virtual-Reality-Server geliefert werden, wenn der Virtual-Reality-Server die Dienstanforderung empfängt, und Entschlüsseln der erhaltenen Zufallsinformationen durch das Virtual-Reality-Endgerät.

**7.** Verfahren nach Anspruch 5, wobei das Versetzen eines Betriebsfokus in dem Virtual-Reality-Szenarium um einen Versatz, der einem Passwortzeichen entspricht, Folgendes umfasst:

Bestimmen einer Menge von Koordinaten eines Anfangsorts des Betriebsfokus in einer Passworteingabeschnittstelle in dem Virtual-Reality-Szenarium; und
Verwenden einer Menge von Abbildungskoordinaten, die dem Passwortzeichen entsprechen, als einen Versatz zum einmaligen Versetzen der Menge von Koordinaten des Anfangsorts.

**8.** Virtual-Reality-Server-Vorrichtung, die zum Ausführen eines Verfahrens nach einem der Ansprüche 1 bis 4 konfiguriert ist.

**9.** Mindestens ein durch einen Computer lesbarer Speicher, der durch eine Maschine ausführbare Anweisungen speichert, wobei die durch eine Maschine ausführbaren Anweisungen, wenn sie durch eine Computervorrichtung ausgeführt werden, die Computervorrichtung dafür konfigurieren, ein Verfahren nach einem der Ansprüche 1 bis 4 auszuführen.

**Revendications**

**1.** Procédé d'authentification basée sur un scénario de réalité virtuelle, appliqué à un serveur de réalité virtuelle, le procédé comprenant :

l'obtention d'informations d'authentification d'environnement interactif et d'informations de mot de passe saisies par un utilisateur dans un scénario de réalité virtuelle qui sont envoyées par un terminal de réalité virtuelle, les informations d'authentification d'environnement interactif étant générées par un calcul basé sur des informations aléatoires fournies au terminal de réalité virtuel ;
la vérification (108) des informations de mot de passe ; et, lorsque les informations de mot de passe ont été vérifiées, l'obtention d'informations aléatoires par un calcul inverse basé sur les informations d'authentification d'environnement interactif, et la vérification si les informations aléatoires obtenues par un calcul inverse coïncident avec les informations aléatoires fournies ; et
la détermination (110) qu'une authentification de sécurité sur un environnement interactif du scénario de réalité virtuelle réussit lorsque les informations aléatoires obtenues par un calcul inverse coïncident avec les informations aléatoires fournies,
les informations aléatoires fournies prenant la forme d'une chaîne de nombres aléatoires d'une longueur prédéterminée, et les informations d'authentification d'environnement interactif prenant la forme d'une séquence de coordonnées qui est obtenue en utilisant un ensemble de coordonnées de mappage correspondant à un caractère de mot de passe dans le but de décaler une focalisation d'opérations dans le scénario de réalité virtuelle après la saisie, par l'utilisateur, du caractère de mot de passe dans le scénario de réalité virtuelle et en joignant tous les ensembles de coordonnées générés après le décalage de la focalisation d'opérations, et tous les ensembles de coordonnées de mappage étant générés en réalisant séparément un calcul de mappage sur des nombres aléatoires dans la chaîne de nombres aléatoires sur la base d'un algorithme de mappage prédéterminé, et tous les ensembles de coordonnées de mappage correspondant respectivement aux nombres aléatoires, la focalisation d'opérations étant la focalisation visuelle dans le scénario de réalité virtuelle pilotée par l'utilisateur.

**2.** Procédé selon la revendication 1, le procédé comprenant en outre :

la réception d'une requête de service envoyée par le terminal de réalité virtuelle lorsque le terminal de réalité virtuelle détecte que l'utilisateur déclenche un service cible dans le scénario de réalité virtuelle ;
la génération des informations aléatoires fournies en réponse à la requête de service reçue ; et
le chiffrement des informations aléatoires générées suivi de la fourniture d'informations aléatoires chiffrées au terminal de réalité virtuelle.

**3.** Procédé selon la revendication 1 ou 2, dans lequel l'obtention d'informations aléatoires par un calcul inverse basé sur les informations d'authentification d'environnement interactif comprend :

le calcul séparé de décalages correspondant aux ensembles de coordonnées dans la séquence de coordonnées, afin d'obtenir des ensembles de coordonnées de mappage correspondant à des caractères de mot de passe dans les informations de mot de passe ;
la réalisation séparée d'un calcul inverse sur les ensembles de coordonnées de mappage correspondant aux caractères de mot de passe sur la base de l'algorithme de mappage prédéterminé, afin de générer des nombres aléatoires correspondant respectivement aux ensembles de coordonnées de mappage ; et
le jonction des nombres aléatoires générés afin d'obtenir la chaîne de nombres aléatoires.

4. Procédé selon la revendication 3, dans lequel le calcul séparé de décalages correspondant aux ensembles de coordonnées dans la séquence de coordonnées comprend

la détermination d'un ensemble de coordonnées d'une localisation initiale de la focalisation d'opérations avant le décalage de la focalisation d'opérations dans une interface d'entrée de mot de passe dans le scénario de réalité virtuelle ; et
le calcul des décalages correspondants sur la base de l'ensemble de coordonnées de la localisation initiale et des ensembles de coordonnées dans la séquence de coordonnées.

5. Procédé d'authentification basée sur un scénario de réalité virtuelle selon la revendication 1, le procédé étant réalisé dans un système comportant le serveur de réalité virtuelle et le terminal de réalité virtuelle, le procédé comprenant en outre :

le calcul (102), par le terminal de réalité virtuelle, des informations d'authentification d'environnement interactif sur la base des informations aléatoires fournies ;
l'obtention (104), par le terminal de réalité virtuelle, des informations de mot de passe saisies par l'utilisateur dans le scénario de réalité virtuelle ; et
l'envoi (106), par le terminal de réalité virtuelle, des informations de mot de passe et des informations d'authentification d'environnement interactif au serveur de réalité virtuelle.

6. Procédé selon la revendication 5, le procédé comprenant en outre :

l'envoi, par le terminal de réalité virtuelle, d'une requête de service au serveur de réalité virtuelle lors de la détection que l'utilisateur déclenche un service cible dans le scénario de réalité virtuelle ; et
l'obtention, par le terminal de réalité virtuelle, d'informations aléatoires chiffrées fournies par le serveur de réalité virtuelle lorsque le serveur de réalité virtuelle reçoit la requête de service, et le déchiffrement des informations aléatoires obtenues.

7. Procédé selon la revendication 5, dans lequel le décalage d'une focalisation d'opérations dans le scénario de réalité virtuelle d'un décalage correspondant à un caractère de mot de passe comprend :

la détermination d'un ensemble de coordonnées d'une localisation initiale de la focalisation d'opérations dans une interface d'entrée de mot de passe dans le scénario de réalité virtuelle ; et
l'utilisation d'un ensemble de coordonnées de mappage correspondant au caractère de mot de passe comme décalage pour décaler une fois l'ensemble de coordonnées de la localisation initiale.

8. Dispositif serveur de réalité virtuelle, configuré pour réaliser un procédé selon l'une quelconque des revendications 1 à 4.

9. Unité(s) de stockage lisible(s) par ordinateur stockant des instructions exécutables par machine, les instructions exécutables par machine, lorsqu'elles sont exécutées par un dispositif informatique, configurant le dispositif informatique pour lui faire réaliser un procédé selon l'une quelconque des revendications 1 à 4.

A VR terminal calculates interactive environment authentication information based on random information delivered by a VR server — 102

The VR terminal obtains password information entered by a user in a VR scenario — 104

The VR terminal sends the password information and the interactive environment authentication information to the virtual reality server — 106

The VR server verifies the password information; and if the password information is verified, obtains random information through reverse calculation based on the interaction environment authentication information, and verifies whether the random information obtained through reverse calculation matches the random information delivered by the virtual reality server — 108

Determine that security authentication on an interactive environment of the VR scenario succeeds if the random information obtained through reverse calculation matches the random information delivered to the virtual reality terminal — 110

FIG. 1

FIG. 2

VR shopping scenario

| XXX commodity | | |
|---|---|---|
| | | ¥ 600 |
| Freight | Beijing to Hangzhou | Express: 20 RMB |
| Monthly sales: 28 | | |
| Quantity: 1 piece | | |

Cancel Purchase

Buy Now ●

Visual focus

User field of view

VR glasses

Payment procedure startup

VR shopping scenario

VR glasses

| XXX commodity | | |
|---|---|---|
| | | ¥ 600 |
| Freight | Beijing to Hangzhou | Express: 20 RMB |

✕    Please enter a payment password

| | | | | | |
|---|---|---|---|---|---|
| | | | | | |

| 3 | 5 | 2 |
|---|---|---|
| 1 | 7 | 9 |
| 8 | 4 | 6 |
| | 0 | |

User field of view

FIG. 3

EP 3 605 996 B1

FIG. 4

24

FIG. 5

VR scenario-based
authentication
apparatus 60

601

602

603

| Calculation module | First acquisition module | Sending module |

FIG. 6

FIG. 7

VR scenario-based
authentication apparatus 80

801

802

803

| Second acquisition module | Verification module | Determining module |

FIG. 8

**EP 3 605 996 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 107122041 A

**Non-patent literature cited in the description**

• A password authentication scheme with secure password updating. **LIN CHUN-LI et al.** Computers & Security. Elsevier Science Publishers, 2003, vol. 22

**27**